# EUROPEAN PATENT SPECIFICATION

(11) **EP 0 472 358 B1**
(45) Date of publication and mention of the grant of the patent: **10.01.1996**
(21) Application number: 91307513.1
(22) Date of filing: 14.08.1991
(51) Int. Cl.: A23L 3/3454

(54) **Method of retaining the flavour of luxury refreshment source**
Verfahren zur Aromakonservierung von Luxus-Erfrischungsprodukten
Procédé pour préserver l'arôme de produits de rafraîchissement de luxe

(30) Priority: 20.08.1990 JP 220639/90; 16.07.1991 JP 175047/91
(43) Date of publication of application: 26.02.1992
(73) Proprietor: Kabushiki Kaisha Ueno Seiyaku Oyo Kenkyujo, Osaka-shi Osaka-fu (JP)
(72) Inventor: Ueno, Ryuzo, Nishinomiya-shi, Hyogo-ken (JP); Tabata, Akihiko, Ushiku-shi, Ibaraki-ken (JP); Matsuda, Toshio, Itami-shi, Hyogo-ken (JP); Fujikami, Asao, Inashiki-gun, Ibaraki-ken (JP)
(74) Representative: Atkinson, Peter Birch

(56) References cited:
- EP-A- 0 036 575
- EP-A- 0 457 457
- GB-A- 2 000 431
- US-A- 4 524 015
- WORLD PATENTS INDEX LATEST Week 9050, Derwent Publications Ltd., London, GB; AN 90-372045

## Description

### BACKGROUND OF THE INVENTION

The present invention relates to a method of retaining the flavor of a luxury refreshment source.

It has been known that roasted coffee bean, leaf of black tea, leaf of green tea, chocolate ponder and the like which are the source of refreshments such as coffee, black tea, green tea, hot chocolate and the like are liable to lose the flavor during preservation. One of the causes is the oxidation by oxygen in the air. Accordingly, the source of the luxury refreshment is usually preserved in a vacuum pack or in a pack charged with nitrogen gas. The complete removal of the oxygen, however, cannot be effected by these method. Recently, it has been proposed that the refreshment source is preserved under the complete non-oxygen condition using a deoxidizing agent.

We however, have found out that even if the tea leaf is preserved under non-oxygen condition which is prepared using a conventional deoxidizing agent, the flavor loses or changes.

European Patent Application No. 81101836 discloses an iron-based oxygen and carbon dioxide absorbent for use in the storage of dried foodstuffs such as coffee beans to prevent the deterioration of taste and aroma. The absorbent comprises a particulate alkaline substance such as an alkali impregnated carrier material (which may be, for example, silica gel or activated carbon) for absorbing carbon dioxide and iron powder for absorbing oxygen. The particulate alkaline material is coated with separator particles (again such as particles of silica gel and activated carbon) to prevent direct contact between the alkali and the iron powder which would otherwise adversely affect the oxygen absorbing effect of the iron powder. The absorbent also includes an electrolyte such as a strong electrolytic inorganic salt (e.g. a metal halide).

British Patent Application No. 7827132 discloses a freshness keeping agent for use in the storage of foodstuffs such as meat, vegetables, bread and the like. The agent comprises an alkali compound (selected from the group of hydroxide, carbonate, and bicarbonate), a sulphite, a deliquescent substance, and a sulphate or a chloride of manganese (II), iron (II), cobalt (II), or nickel (II) (which may be substituted in part by ascorbic acid or its salt). A further absorbent, such as activated charcoal, may be added to retain water and act as a deodorant. The freshness keeping agent functions to absorb oxygen and/or generate carbon dioxide to thereby inhibit deterioration of a foodstuff. For instance, a carbonate or a bicarbonate may be selected as the alkali compound which will both absorb oxygen and generate carbon dioxide at the same time.

The object of the present invention is to provide a method of retaining the flavor, by which the deterioration or flavor of a luxury refreshment source is prevented so as to keep the flavor thereof for a long time.

According to the present invention there is provided a method of retaining flavor of a luxury refreshment source, which comprises sealing it together with a flavor retaining agent containing 15-50% by weight ascorbic acid and/or salt thereof; 15-50% by weight alkaline material; and 10-30% by weight of silica gel.

The ascorbic acid is preferably D-iso-ascorbic acid.

The silica gel may be one which is produced by a vapour phase process.

Preferably the agent also contains a reaction progressing agent in the amount of 2 to 100 parts by weight based on 100 parts by weight of the ascorbic acid or the salt. The reaction progressing agent may be selected from the group consisting of iron, copper, zinc, tin or salts thereof and activated carbon.

Preferably the flavor retaining agent additionally contains water in an amount of 5-50% by weight.

Fig. 1 is a chart of gas chromatography of gas in the head space of a standard pack.

Fig. 2 is a chart of gas chromatography of gas in the head space of a pack of the Example 6.

Fig. 3 is a chart of gas chromatography of gas in the head space of a pack of the Comparative Example 1.

The present invention relates to a flavor retaining agent which essentially comprises ascorbic acid and/or a salt thereof, an alkaline material and a silica gel; and a method of retaining the flavor of a luxury refreshment source which comprises sealing the luxury refreshment source into a package together with the flavor retaining agent.

In the present specification, what is meant by the term "luxury refreshment source" is, for instance, a roasted coffee bean, a black tea leaf, a green tea leaf, chocolate powder, green tea powder and the like, which are a source of a luxury refreshment such as coffee, black tea, green tea, hot chocolate, oolong tea, maccha (powdered tea) and the like.

The flavor retaining agent for a source of luxury refreshment used in the method of the present invention (referred to as a retaining agent hereinafter) contains ascorbic acid and/or salt thereof, an alkaline material, and a silica gel as effective ingredients.

In the present invention the ascorbic acid and/or salt thereof includes L-ascorbic acid, D-iso-ascorbic acid (erythrobic acid) and/or the salt thereof.

Ascorbic acid which is not neutralized can be used, but it may be wholly or partially neutralized with a suitable alkaline material such as an alkaline metal, an alkaline earth metal and the like. Especially preferable salts are sodium, potassium, calcium, magnesium and the like.

The ascorbic acid and/or the salt may be used preferably in the amount of 10 to 60 % by weight, especially 15 to 50 % by weight based on the total weight of the retaining agent.

In to the present invention the alkaline materials include salts of an alkaline metal such as lithium, sodium, potassium and the like, alkaline earth metal such as magnesium, calcium and the like, aluminum and the like of hydroxides, carboxylic acids, hydrogen carboxylic acids or organic acids. As an organic acid acetic acid, lactic acid, citric acid, malic acid, oxalacetic acid and the like are exemplified. The most preferable salts are sodium salt, potassium salt, calcium salt, magnesium salt and the like.

The alkaline material may be combined preferably in the amount of 10 to 60 % by weight, especially 15 to 50 % by weight based on the total weight of the retaining agent.

In the present invention the silica gel may be a liquid phase produced silica gel which is produced according to a liquid phase process, for instance, the decomposition of sodium silicate; a vapor phase produced silica gel which is produced according to a vapor phase process, for instance, the hydropyrolysis of halogenated silica. A preferable particle size of the silica gel according to the present invention is about 1000 µm or less, more preferably about 500 µm or less. As a silica gel one having fine pores inside and one having substantially no pore are commercially available. Comparing the both, the same particle size, the silica gel having substantially no fine pore inside is more preferable in view of the exhibition of effects when L-ascorbic acid or salt thereof is used. The silica gel having substantially no fine pore inside is usually obtained according to the vapor phase process. The both type of the silica gel may be used as mixed.

The silica gel may be used in the amount of 5 to 50 % by weight, especially about 10 to 30 % by weight.

The retaining agent used according to the method of the present invention possesses the flavor retaining ability of a luxury refreshment source accompanied with oxygen absorbability. Therefore, the retaining agent can be also used as an oxygen absorbent. In this case a reaction accelerator and water may be preferably used in addition to the retaining agent in order to improve the oxygen absorbing efficiency, especially oxygen absorbing rate.

The reaction accelerator means a material working as a catalyst for an oxygen absorbing of the ascorbic acid and the salts.

As the reaction accelerator an activated carbon, a transition elements such as iron, copper, zinc, tin and the like can be used. Compounds containing iron is especially preferable in the aspect of the exhibition of the effects as well as the safety. As the iron compound ferrous salts, ferric salts, or iron salts of organic acid may be used.

The reaction accelerator may be used in the amount of 1 to 200 parts by weight based on 100 parts by weight the ascorbic acid and/or salt thereof, more preferably, 2 to 100 parts by weight and most preferably 2 to 50 parts by weight.

Water plays an important role to exhibit the activity as an oxygen absorbent for ascorbic acid and/or salt thereof. The water may be used in any form, for instance, it may be directly added as it is when each ingredient is mixed, added after premixed with the other ingredients, or added as a crystal water of each ingredient.

The water is preferably used in the amount of 5 to 50 % by weight, or more preferably 10 to 40 % by weight based on the total weight of the retaining agent.

In the present invention the retaining agent may be used 0.05 to 100 parts by weight, preferably 0.1 to 50 parts by weight, more preferably 0.5 to 30 parts by weight based on 100 parts by weight of the luxury refreshment source. If the amount of the retaining agent is less than 0.05 parts by weight, the flavor retaining ability does not sufficiently show, and if it is more than 100 parts by weight, higher results cannot be expected, and is not economical.

The retaining agent is used as separated from the luxury refreshment source by a gas permeable substance such as paper, nonwoven, microporous film, plastic film and the like, lest it should not be mixed with the luxury refreshment source.

At the practice of the present invention it is naturally preferable that the retaining agent and the luxury refreshment source are maintained separated from the open air; especially sealed with a packing substance excellent in gas barrier and flavor keeping properties. As such a packing substance there are exemplified metallic can, an aluminum laminated film, an aluminum vapor deposition film, a polyvinylidene chloride coated film, a polyester film, a film or sheet laminated therewith and the like.

The present invention is illustrated by the following Examples.

### EXAMPLE 1

Sodium salt of L-ascorbic acid 10 parts by weight, silica gel (trade name: Finesil, average diameter: about 18 nm, liquid phase produced silica gel, available from Tokuyama Soda K. K.) 5 parts by weight and sodium salt of citric acid 10 parts by weight were mixed to give a retaining agent 3 g. The obtained retaining agent was packed into a packing substance made of Japanese paper/perforated polyethylene (60 mm x 45 mm).

### EXAMPLES 2 - 5

Retaining agents were prepared according to the Example 1 except that the formulation of the retaining agent and the packing substance as shown in Table 1 were used.

**Table 1**

| Example | formulation of retaining agent ingredients | part by wt. | packing substance |
|---|---|---|---|
| 1 | sodium L-ascorbic acid | 10 | (4) |
| | silica gel (1) | 5 | |
| | sodium citrate | 10 | |
| 2 | sodium L-ascorbic acid | 10 | (5) |
| | silica gel (2) | 3 | |
| | sodium carbonate | 2 | |
| | sodium hydrogen carbonate | 6 | |
| 3 | L-ascorbic acid | 10 | (4) |
| | silica gel (3) | 7 | |
| | calcium hydroxide | 3 | |
| 4 | sodium erythorbate | 10 | (5) |
| | silica gel (2) | 3 | |
| | sodium carbonate | 2 | |
| | sodium hydrogen carbonate | 6 | |
| | ferrous sulfate | 2 | |
| | water | 6 | |
| 5 | sodium erythorbate | 10 | (5) |
| | silica gel (3) | 8 | |
| | calcium hydroxide | 3 | |
| | ferric chloride | 2 | |
| | water | 5 | |

| | | | |
|---|---|---|---|
| (1) Finesil, average diameter: about 18nm, liquid phase produced silica gel, available from Tokuyama Soda K.K. | | | |
| (2) Aerosil 200, average diameter: about 12 nm, vapor phase produced silica gel, available from Nippon Aerosil K.K. | | | |
| (3) Finesil, average diameter: about 18nm, liquid phase produced silica gel, available from Tokuyama Soda K.K. | | | |
| (4) packing substance made of Japanese paper/perforated polyethylene (60mm x 45mm), | | | |
| (5) packing substance made of perforated polyester/Japanese paper/perforated polyethylene (60 mm x 45 mm) | | | |

### EXAMPLE 6 and COMPARATIVE EXAMPLE 1

A retaining agent was prepared by mixing sodium erythorbate (1 hydrate) 12 parts by weight, sodium carbonate (1 hydrate) 2.5 parts by weight, sodium hydrogen carbonate 6 parts by weight, silica gel (Aerosil 200, average diameter of about 12 nm, vapor phase produced silica gel, available from Nippon Aerosil K.K.) 5 parts by weight, ferric sulfate (7 hydrate) 2 parts by weight and water 6 parts by weight. The retaining agent obtained 2.8 g was packed into a packing substance made of perforated polyethylene laminated paper (60 mm x 45 mm).

This packed retaining agent and green tea (sencha) 20 g were sealed into a bag made of KON (nylon coated with polyvinylidene chloride) 25 µm/PE (polyethylene) 50 µm laminate film (120 mm x 168 mm) (Ex.6).

As a comparative example, repeating the same manner as in the Example 1, a retaining agent and the green tea were sealed into a bag except that as the retaining agent an iron type deoxidizing agent, Oxy-eater FD-100P (available from Ueno Seiyaku K.K.), was used (Comp. Ex. 1).

### FUNCTION TEST 1

The sealed bag obtained was preserved at 25 °C, and was subjected to a function test concerning the flavor with time according to a two points comparative test by 30 panels. The results were shown in Table 2.

**Table 2**

| | | | | |
|---|---|---|---|---|
| preserving days | 7 | 14 | 21 | 28 |
| panels who answered Ex. 6 has better flavor than Comp. Ex. 1 | 25 | 26 | 25 | 30 |
| panels who answered Comp. Ex. 1 has better flavor than Ex. 6 | 5 | 4 | 5 | 0 |

The retaining agent of the present invention (Ex. 6) had a significant difference by 1 % over every preserving days in comparison with the Comp. Ex. 1, and retained the excellent flavor.

### ANALYTICAL TEST

The gas contained in the head space of the each sealed pack of a standard, the comparative (Comp. Ex. 1) and the pack containing the retaining agent according to the present invention (Ex. 6) was analyzed by gas chromatography. As the standard one which was preserved at -80 °C after nitrogen gas was charged into the pack was used. As the comparative and the bag of the present invention those which were preserved for 28 days were used.

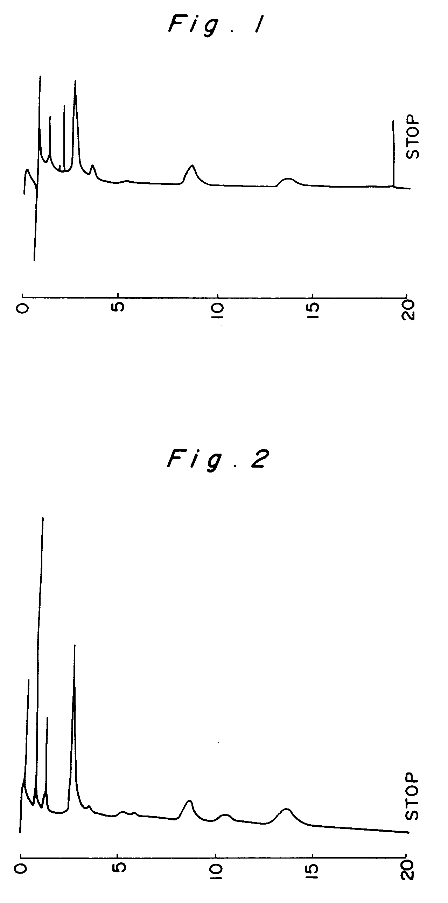

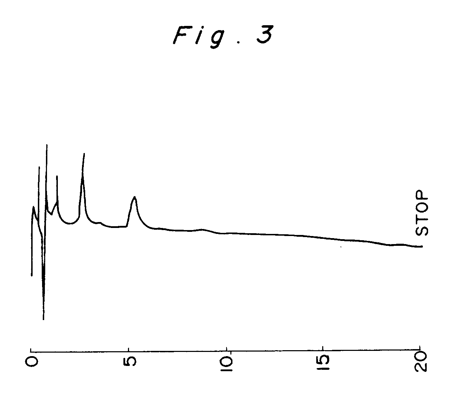

The Condition of Analysis:
1) gas chromatography: Shimazu GC-14A
2) detector: FID
3) column: PORAPAK Q 80/100 0.3 cm x 210 cm
4) temperature: column temperature 150 °C, injection temperature 190 °C, detection temperature 190 °C
5) carrier gas: nitrogen gas 1 kg/cm²
6) sample injection: 1 ml
The results were shown in Figs. 1 - 3.

The gases in the standard and in the pack of the present invention indicated substantially the same absorbing peaks, but the gas in the comparative (Comp. Ex. 1) the absorbing peak after the retention time of 8 minutes elapsed became smaller or disappeared, which was clearly different from the absorbing peak of the standard. The component corresponding to the each peak has not been identified, but some peaks which appeared in the Comp. Ex. 1 disappeared, and it is considered that the materials corresponding to the disappeared peaks influenced to the flavor.

### FUNCTION TEST 2

The extract from the green tea preserved for 28 days were subjected to a function test according to the two points comparative test (20 panels). The results were shown in Table 3.

**Table 3**

| | |
|---|---|
| preserving day | 28 |
| panel who answered Ex. 6 has better flavor than Comp. Ex. 1 | 16 |
| panel who answered Comp. Ex. 1 has better flavor than Ex. 6 | 4 |

The Ex. 6 of the present invention is excellent in the flavor by the significant difference of 5 % in comparison with the Comp. Ex. 1.

### FUNCTION TEST 3

A function test of the flavor was carried out according to the FUNCTION TEST 1 except that a black tea (Ceylon) was used instead of the green tea. The result was shown in Table 4

**Table 4**

| | | | | |
|---|---|---|---|---|
| storage day | 7 | 14 | 21 | 28 |
| panels who answered Ex. 6 has better flavor than Comp. Ex. 1 | 26 | 23 | 27 | 28 |
| panels who answered Comp. Ex. 1 has better flavor than Ex. 6 | 4 | 7 | 3 | 2 |

The Ex. 6 of the present invention is more excellent in the flavor by the significant difference of 1 % over every preserving day than the Comp. Ex. 1.

### COMPARATIVE EXAMPLES 2 - 5

The packs containing each retaining agent and green tea were sealed in the same manner as described in the Example 6 except that the commercially available deoxidizing agents having following formulations were used as a retaining agent.

### formulation of retaining agent

- Comp. Ex. 2:: iron type deoxidizing agent containing active iron oxide (a)
- Comp. Ex. 3:: ascorbic acid type deoxidizing agent containing sodium ascorbate and carbon black (b)
- Comp. Ex. 4:: catechol type deoxidizing agent containing catechol and activated carbon (c)
- Comp. Ex. 5: ascorbic acid type deoxidizing agent containing sodium ascorbate and activated carbon (d)

(a) Ageless Z-100 (available from Mitsubishi Gas Kagaku K.K.),
(b) Ageless G-100 (available from Mitsubishi Gas Kagaku K.K.),
(c) Tamotsu P-500 (available from Oji Kako K.K.),
(d) Sendohojizai C-500 (available from Toppan Insatsu K.K.)

### Function Test 4

The obtained packs were preserved at 25 °C for 15 days, and subjected to a function test. The residual oxygen content of each pack reduced to less than 0.1 % after two days since it was preserved.

A pack into which green tea was packed, and nitrogen gas charged was immediately frozen and kept thereafter. The function test was carried out by evaluating the flavor of each test group according to ±3 points method, assuming flovor of this pack (standard) was evaluted as 4 points. The average points of 15 panels were obtained. The results were shown in Table 5.

**Table 5**

| Test groups | average points |
|---|---|
| Comparative Example 2 | 3.5 |
| Comparative Example 3 | 3.3 |
| Comparative Example 4 | 3.0 |
| Comparative Example 5 | 3.7 |
| Example 6 | 4.3 |

### Function Test 5

The retaining agent (Ex. 6) and green tea 90 g were sealed into a bag (120 mm x 200 mm) made of KON (polyvinylidene coated nylon) 25 µm/PE (polyethylene) 50 µm laminated film (group of the present invention).

As a comparative example green tea was sealed into the same bag without the retaining agent (Comparative group).

These were preserved at 25 °C for 30 days, and function test was made for each test group.

The flavor of the standard which was preserved at freezing was four points, and the flavor of the each test group was evaluated according to ±3 point method. The average point of 22 panels was obtained, and the results were shown in Table 6.

**Table 6**

| test groups | average point |
|---|---|
| comparative group | 3.0 |
| group of the present invention | 3.8 |

The group of the present invention was excellent in the flavor in comparison with the comparative groups.

### Examples 7 and Comparative Example 6

Sodium erythorbate (1 hydrate) 10 parts by weight, sodium carbonate (1 hydrate) 2.5 parts by weight, sodium hydrogen carbonate 6 parts by weight, silica gel (Tokusil NR, available from Tokuyama Soda K.K., average particle size of 150 µm, produced by a liquid phase process) 5 parts by weight, ferric sulfate (1 - 1.5 hydrates) 3 parts by weight and water 5 parts by weight were mixed to give a retaining agent. The obtained retaining agent 3.3 g was packed into a bag (65 mm x 45 mm) of PET (polyethylene terephthalate) 12 µm/PE 15 µm/paper (40 g/m²)/perforate PE 25 µm.

The obtained retaining agent bag and rose hip whole 20 g were sealed into a bag (50 mm x 300 mm) of PET/aluminium film/PE laminated film (Ex. 7).

A sealed rose hip whole (Comp. Ex. 6) was prepared according to the same manner as in the above except that Oxy-eater FD-100P was used as a retaining agent.

### Function Test 6

The both groups were preserved at 25 °C and evaluated according to the function test 1. The result was shown in Table 7.

**Table 7**

| | | | | |
|---|---|---|---|---|
| preserving day | 7 | 14 | 21 | 28 |
| panels who answered Ex. 7 has better flavor than Comp. Ex. 6 | 22 | 24 | 22 | 23 |
| panels who answered Comp. Ex. 6 has better flavor than Ex. 7 | 8 | 6 | 8 | 7 |

The flavor of Ex. 7 of the present invention is better than that of Comp. Ex. 6 by 1 % or 5% significant differences in every preserving days.

### Function Test 7

The same test as in the Function Test 2 was carried out on the extraction of the rose hip whole which was retained for 28 days. The results were shown in Table 8.

**Table 8**

| | |
|---|---|
| storage day | 28 |
| panels who answered Ex. 7 has better flavor than Comp. Ex. 6 | 17 |
| panels who answered Comp. Ex. 6 has better flavor than Ex. 7 | 3 |

The flavor of Ex. 7 was better than that of the Comparative Example 6 by 1 % significance difference.

### Example 8

A retaining agent was prepared by mixing sodium ascorbate 10 parts by weight, sodium carbonate (1 hydrate) 4 parts by weight, silica gel (Aerosil 200) 4 parts by weight, ferric chloride 2 parts by weight and water 4.5 parts by weight. The mixture obtained 2.5 g was packed into a bag (60 mm x 45 mm) made of PET/PE/paper/perforated PE film.

The obtained packed retaining agent and roasted pulverized coffee beans 100 g was sealed into a bag (120 mm x 168 mm) made of KON/PE laminate film (group of the present invention).

According to the same manner as the just above the roasted pulverized coffee beans were sealed into a bag except that the retaining agent was not used (Comparative group). After each sealed package was preserved at 30 °C for 60 days the flavor of the coffee beans was evaluated. In the group of the present invention the flavor of coffee just after roasted was retained, but it was remarkably deteriorated in the Comparative group.

## Claims

1. A method of retaining flavour of a luxury refreshment source, which comprises sealing it together with a flavour retaining agent containing 15-50% by weight ascorbic acid and/or salt thereof; 15-50% by weight alkaline material; and 10-30% by weight of silica gel.

2. A method according to claim 1, in which the ascorbic acid is D-iso-ascorbic acid.

3. A method according to claim 1, in which the silica gel is one which is produced by a vapour phase process.

4. A method according to claim 1, in which a reaction progressing agent is additionally contained in the amount of 2 to 100 parts by weight based on 100 parts by weight of the ascorbic acid or the salt.

5. A method according to claim 4, in which the reaction progressing agent is selected from the group consisting of iron, copper, zinc, tin or salts thereof and activated carbon.

6. A method according to claim 1, wherein the flavour retaining agent additionally contains water in an amount of 5-50% by weight.

7. A method of retaining flavour of a luxury refreshment source, which comprises sealing it together with a flavour retaining agent consisting of 15-50% by weight ascorbic acid and/or salt thereof; 15-50% by weight alkaline material; 10-30% by weight of silica gel; a reaction progressing agent in the amount of 2 to 100 parts by weight based on 100 parts by weight of the ascorbic acid or salt; and water in the amount of 5 to 50 parts by weight based on 100 parts by weight of the other ingredients.

## Patentansprüche

1. Verfahren zur Beibehaltung des Geschmacks und des Aromas einer Luxuserfrischungsquelle, dadurch **gekennzeichnet,** daß sie zusammen mit einem Geschmacks/Aroma-Beibehaltungsmittel, welches 15-50 Gew.-% Ascorbinsäure und/oder ein Salz davon, 15-50 Gew.-% alkalisches Material und 10-30 Gew.-% Silicagel enthält, versiegelt wird.

2. Verfahren nach Anspruch 1, dadurch **gekennzeichnet,** daß die Ascorbinsäure D-Isoascorbinsäure ist.

3. Verfahren nach Anspruch 1, dadurch **gekennzeichnet,** daß das Silicagel ein Silicagel ist, welches gemäß einem Dampfphasenverfahren hergestellt worden ist.

4. Verfahren nach Anspruch 1, dadurch **gekennzeichnet,** daß zusätzlich ein Reaktionsprogressionsmittel in einer Menge von 2 bis 100 Gew.-Teilen, bezogen auf 100 Gew.-Teile der Ascorbinsäure oder des Salzes, vorhanden ist.

5. Verfahren nach Anspruch 4, dadurch **gekennzeichnet,** daß das Reaktionsprogressionsmittel ausgewählt wird aus der Gruppe, bestehend aus Eisen, Kupfer, Zink, Zinn oder den Salzen davon, und Aktivkohlenstoff.

6. Verfahren nach Anspruch 1, dadurch **gekennzeichnet,** daß das Geschmacks/Aroma-Beibehaltungsmittel zusätzlich Wasser in einer Menge von 5-50 Gew.-% enthält.

7. Verfahren zur Beibehaltung des Geschmacks und des Aromas einer Luxuserfrischungsquelle, dadurch **gekennzeichnet,** daß sie zusammen mit einem Geschmacks/Aroma-Beibehaltungsmittel, bestehend aus 15-50 Gew.-% Ascorbinsäure und/oder einem Salz davon, 15-50 Gew.-% alkalischem Material, 10-30 Gew.-% Silicagel, einem Reaktionsprogressionsmittel in einer Menge von 2 bis 100 Gew.-Teilen, bezogen auf 100 Gew.-Teile der Ascorbinsäure oder des Salzes, und Wasser in einer Menge von 5 bis 50 Gew.-Teilen, bezogen auf 100 Gew.-Teile der anderen Bestandteile, versiegelt wird.

## Revendications

1. Procédé pour préserver l'arôme d'une source de rafraîchissement de luxe, qui comprend le fait de l'emballer hermétiquement avec un agent de conservation d'arôme contenant 15-50 % en poids d'acide ascorbique et/ou un sel de celui-ci; 15-50 % en poids d'un produit alcalin; et 10-30 % en poids de gel de silice.

2. Procédé selon la revendication 1, dans lequel l'acide ascorbique est l'acide D-iso-ascorbique.

3. Procédé selon la revendication 1, dans lequel le gel de silice est un gel de silice qui est produit en phase vapeur.

4. Procédé selon la revendication 1, dans lequel un agent faisant progresser la réaction est en outre contenu dans une quantité de 2 à 100 parties en poids basée sur 100 parties en poids de l'acide ascorbique ou du sel.

5. Procédé selon la revendication 4, dans lequel l'agent faisant progresser la réaction est choisi dans le groupe constitué du fer, du cuivre, du zinc, de l'étain ou des sels de ceux-ci, et du charbon actif.

6. Procédé selon la revendication 1, dans l'agent de conservation d'arôme contient en outre de l'eau dans une quantité de 5-50 % en poids.

7. Procédé pour préserver l'arôme d'une source de rafraîchissement de luxe, qui comprend le fait de l'emballer hermétiquement avec un agent de conservation d'arôme constitué de 15-50 % en poids d'acide ascorbique et/ou d'un sel de celui-ci; 15-50 % en poids d'un produit alcalin; 10-30 % en poids de gel de silice; un agent faisant progresser la réaction dans une quantité de 2 à 100 parties en poids basée sur 100 parties en poids de l'acide ascorbique ou du sel; et de l'eau dans une quantité de 5 à 50 parties en poids basée sur 100 parties en poids des autres ingrédients.
